# EUROPEAN PATENT SPECIFICATION

(11) **EP 0 832 732 B1**
(45) Date of publication and mention of the grant of the patent: **06.03.2002**
(21) Application number: 97202955.7
(22) Date of filing: 25.09.1997
(51) Int. Cl.: B29C 65/10, B65B 51/20

(54) **Heating device for heat-sealing top portions of containers**
Heizgerät zum Heissiegeln von Behälteroberteilen
Dispositif de chauffage pour le scellage à chaud des parties supérieures de récipients

(30) Priority: 27.09.1996 JP 25646396
(43) Date of publication of application: 01.04.1998
(73) Proprietor: Shikoku Kakoki Co., Ltd., Itano-gun Tokushima (JP)
(72) Inventor: Abe, Kazuo, Shikoku Kakoki Co., Ltd., Itano-gun, Tokushima (JP); Kitajima, Hiroshi, Shikoku Kakoki Co., Ltd., Itano-gun, Tokushima (JP); Ueda, Michio, Shikoku Kakoki Co., Ltd., Itano-gun, Tokushima (JP)
(74) Representative: Vollebregt, Cornelis Jacobus, Ir.

(56) References cited:
- US-A- 3 207 049
- US-A- 3 309 841
- US-A- 4 838 009
- PATENT ABSTRACTS OF JAPAN vol. 1997, no. 03, 31 March 1997 (1997-03-31) -& JP 08 301207 A (TOPPAN PRINTING CO LTD), 19 November 1996 (1996-11-19)
- PATENT ABSTRACTS OF JAPAN vol. 1995, no. 04, 31 May 1995 (1995-05-31) -& JP 07 010131 A (TOPPAN PRINTING CO LTD), 13 January 1995 (1995-01-13)

## Description

### BACKGROUND OF THE INVENTION

The present invention relates to a heating device for example, for containers each having an open upper end and a square or rectangular cross section for use in folding the top portions of the containers to the shape of a gabled roof and heat-sealing the top portions.

US-A-3 309 841 discloses a top heater for plastic coated paperboard container packaging machines. The container can be disposed on a continuously moving conveyor or on a conveyor moving step by step.

US-A-4 838 009 discloses a method of activating hot closure panels. A second nozzle block is provided in order to increase the rate of production of closed cartons.

Such heating devices are already known which comprise a primary heater and a secondary heater arranged respectively at a first stop position and a second stop position of holders of an intermittently drivable container conveyor, the primary heater having a primary hot air nozzle in the form of a bottomed tube generally square to rectangular in horizontal section and movable into and out of a top forming portion of the container as held by the holder at halt in the first stop position, the secondary heater having a secondery hot air nozzle in the form of a bottomed tube generally square to rectangular in horizontal section and movable into and out of the top forming portion of the container as held by the holder at halt in the second stop position. The primary hot air nozzle and the secondary hot air nozzle are each formed in the side wall thereof with a plurality of orifices arranged in a specified pattern so as to correspond to the region to be heated of the top forming portion. The positions of the orifices of the primary hot air nozzle are respectively in match with the positions of the orifices of the secondary hot air nozzle with respect to the container as held by the holder at halt in the corresponding stop position.

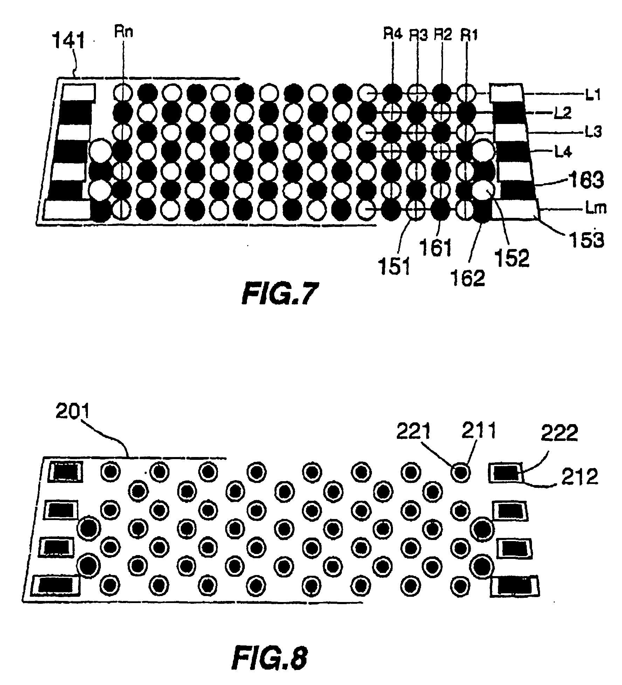

FIG. 8 shows the region 201 to be heated of the top forming portion of the container heated by the conventional device. Blank circles 211 and blank rectangles 212 are the portions heated by the primary heater. Solid circles 221 and solid rectangles 222 are the portions heated by the secondary heater. The blank circles 211 overlap the respective solid circles 221, and the blank rectangles 212 overlap the respective solid rectangles 222. This means that the same portion is exposed to hot air twice. The portion to which the hot air is applied then becomes heated excessively, whereas a portion away from this porion is likely to be heated insufficiently, and it is difficult to uniformly heat the entire region to be heated.

### SUMMARY OF THE INVENTION

An object of the present invention is to overcome the above problem and to provide a heating device for heat-sealing the top portions of containers which device is adapted to uniformly heat the entire region to be heated of each container.

The present invention provides a heating device for heat-sealing top portions of containers which comprises a primary heater and a secondary heater arranged respectively at a first stop position and a second stop position of holders of an intermittently drivable container conveyor, the primary heater having a primary hot air nozzle in the form of a bottomed tube generally square to rectangular in horizontal section and movable into and out of a top forming portion of the container as held by the holder at halt in the first stop position, the secondary heater 52 having a secondary hot air nozzle in the form of a bottomed tube generally square to rectangular in horizontal section and movable into and out of the top forming portion of the container as held by the holder at halt in the second stop position, the primary hot air nozzle and the secondary hot air nozzle being each formed in a side wall thereof with a plurality of orifices arranged in a specified pattern so as to correspond to the region to be heated of the top forming portion, the heating device being such that the positions of the orifices of the primary hot air nozzle differ respectively from the positions of the orifices of the secondary hot air nozzle with respect to the container as held by the holder at halt in the corresponding stop position.

With the heating device embodying the invention, the positions of the orifices of the primary hot air nozzle differ respectively from the positions of the orifices of the secondary hot air nozzle with respect to the container as held by the holder at halt in the corresponding stop position, so that the hot air forced out from the orifices of the primary hot air nozzle and the hot air forced out from the secondary hot air nozzle orifices are applied to different parts of the top forming portion of the container in the region thereof to be heated. This eliminates the likelihood that the same part of the container will be heated twice, consequently obviating overheating and insufficient heating and ensuring uniform heating of the entire region of the container to be heated.

Preferably, the primary hot air nozzle and the secondary hot air nozzle each have four side walls, and in each side wall of the primary hot air nozzle and the side wall of the other nozzle corresponding thereto, the orifices of the two nozzles are arranged in lines at the same spacing and in rows at the same spacing, the two nozzles being identical in the respective positions of the lines and in the respective positions of the rows with respect to the container as held by the holder at halt in the corresponding stop position, the orifices of one of the nozzles being positioned at points of intersection of the odd-numbered lines and the odd-numbered rows and at points of intersection of the even-numbered lines and the even-numbered rows, the orifices of the other nozzle being positioned at points of intersection of the odd-numbered lines and the even-numbered rows and at points of intersection of the even-numbered lines and the odd-numbered rows.

The portions to be exposed to the hot air from the orifices of the primary hot air nozzle and the portions to be exposed to the hot air from the orifices of the secondary hot air nozzle are arranged horizontally as wells as vertically at a specified spacing, so that the container can be heated very favorably.

### BRIEF DESCRIPTION OF THE DRAWINGS

FIG. 1 is a front view of a heating device embodying the invention;
FIG. 2 is a side elevation of the heating device;
FIG. 3 is a view in section taken along the Line III-III in FIG. 2;
FIG. 4 is an exploded perspective view of a primary heater of the heating device;
FIG. 5 is a perspective view of the top portion of a container to be heated by the device;
FIG. 6 is a side elevation schematically showing hot air nozzles of the primary heater and secondary heater of the device;
FIG. 7 is a diagram for illustrating the regularity of arrangement pattern of the hot air nozzle orifices; and
FIG. 8 is a diagram corresponding to FIG. 7 and showing the regularity of orifice arrangement pattern of a conventional device.

### DESCRIPTION OF THE PREFERRED EMBODIMENT

An embodiment of the invention will be described blow with reference to the drawings.

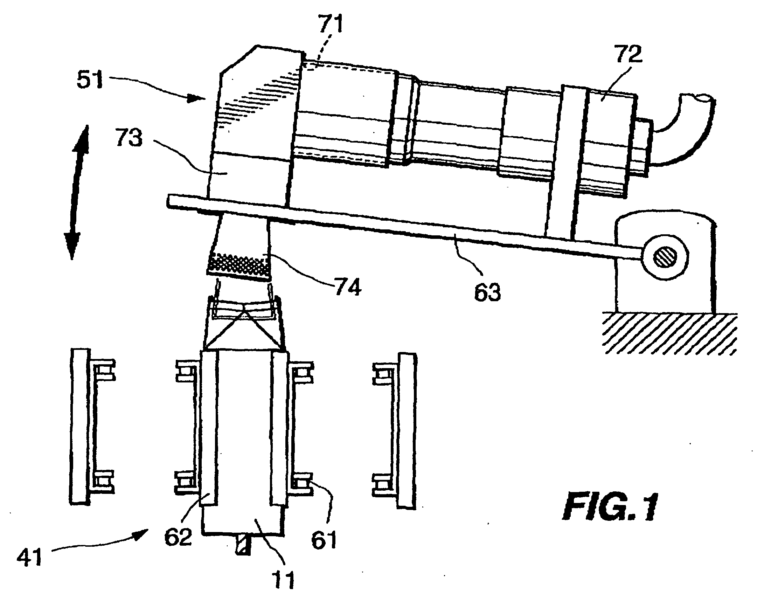

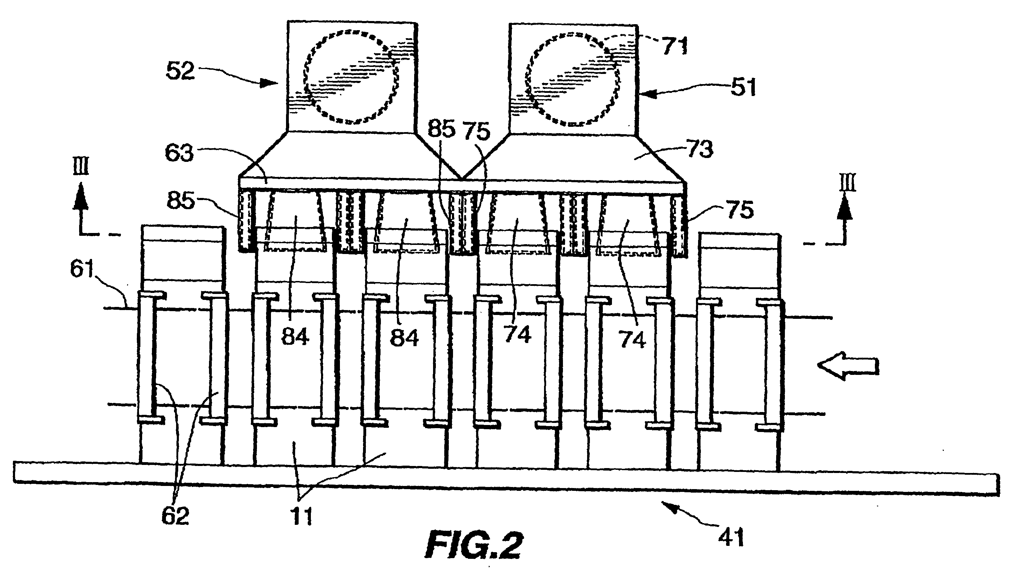

In the following description, the terms "front" and "rear" refer respectively to the left-hand side and the right-hand side of FIG. 2, and the terms "left" and "right" respectively to the left-hand side and the right-hand side of FIG. 1.

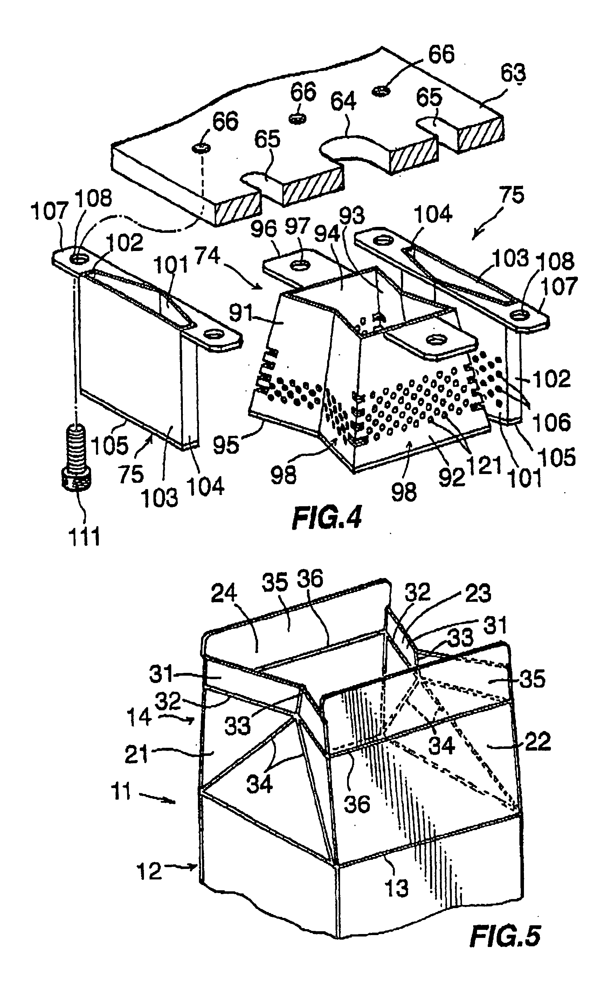

FIG. 5 shows the upper portion of a container 11. The container 11 is prepared from a paper-base laminate having a polyethylene layer over each of the inner and outer surfaces, and is in the form of a bottomed tube rectangular to square in cross section. The container 11 comprises a trunk forming portion 12 having a quadrilateral horizontal section, and a top forming portion 14 extending from the upper end of the portion 12 with an endless lower horizontal score 13 formed therebetween.

The top forming portion 14 has four quadrilateral top panels integral with one another with a ridgeline formed between the adjoining panels, i.e., a first top panel 21 facing to the front, second top panel 22 facing rightward, third top panel 23 facing rearward and fourth top panel 24 facing leftward.

The first top panel 21 has an upper horizontal score 32 partitioning the panel into a striplike seal part 31 toward its upper end and the other portion, a vertical score 33 extending upward from the midpoint of length of the score 32 across the seal part 31, and two oblique scores 34 extending obliquely downward in directions opposite to each other from the lower end of the vertical score 33 to opposite ends of the portion of the lower score 13 defining the panel 21. The second top panel 22 is formed with an upper horizontal score 36 joined to the upper horizontal score 32 of the first top panel 21 and partitioning off a seal part 35. The third top panel 23 has the same structure as the first top panel 21. The fourth top panel 24 has the same structure as the second top panel 22.

The top forming portion 14 is prepared by being prefolded to the shape of a gabled roof and thereafter freed from the prefolded state. The prefolding of the portion 14 inwardly bends the first and third top panels 21, 23 with their upper ends brought toward each other, also inwardly bending the second end fourth top panels 22, 24 to bring their upper ends toward each other. The upper portions of the first and third top panels 21, 23 including the seal parts 31 are each inwardly bent so as to become V-shaped in horizontal section. On the other hand, the second and fourth top panels 22, 24 remain substantially flat.

Heat is to be applied to the inner and outer surfaces of the seal parts 31 of the first and third top panels 21, 23, and to the inner surfaces of the seal parts 35 of the second and fourth top panels 22, 24.

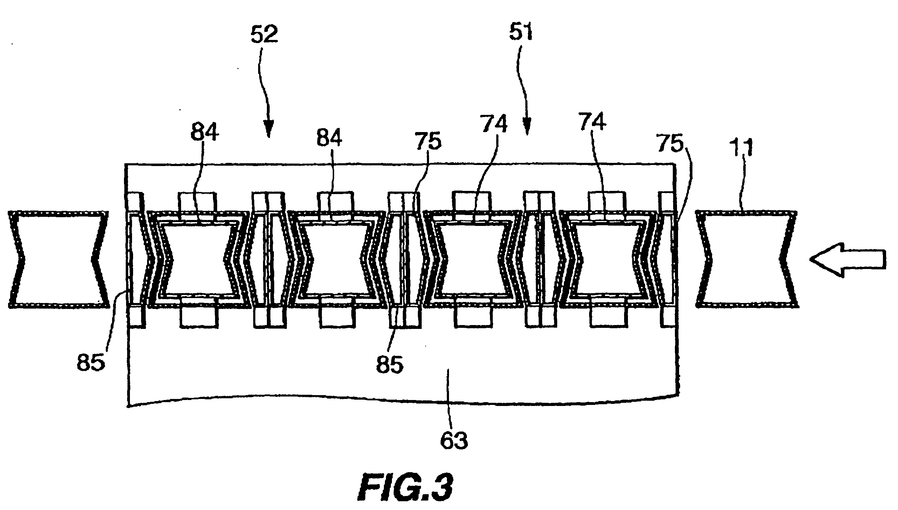

FIGS. 1 to 3 show a container conveyor 41, and a primary heater 51 and a secondary heater 52 arranged along the path of transport of the conveyor 41.

The conveyor 41 comprises chains 61 and a plurality of holders 62 attached thereto at a predetermined pitch. The chains 61 are so intermittently driven that the holders 62 are moved two holder pitches at a time. The container 11 is held by each holder 62 with the first top panel 21 facing toward the front.

A pivotal plate 63 movable upward and downward is so disposed that its movable end projects to a position above the path of transport of containers. The primary heater 51 and the secondary heater 52 are mounted on the plate 63.

The primary heater 51 comprises a heater body 72 having a hot air outlet 71 positioned close to the movable end of the pivotal plate 63 and opened leftward, a dividing chamber 73 provided on the upper side of movable end of the pivotal plate 63 and communicating with the hot air outlet 71, primary hot air nozzles 74 provided on the underside of movable end of the pivotal plate 63 and communicating with the dividing chamber 73 for heating the inner surfaces of front and rear containers, and two primary hot air nozzles 75 arranged on the underside of movable end of the pivotal plate 63 respectively at the front and rear sides of each of the nozzles 74 and communicating with the dividing nozzle 75 for heating the outer surface of the container.

The secondary heater 52 comprises secondary hot air nozzles 84 for heating the outer surfaces of front and rear containers, and two secondary hot air nozzles 85 arranged at the front and rear sides of each nozzle 84 for heating the outer surface of the container. The secondary heater 52 has the same construction as the primary heater 51 except these nozzles 84, 85.

The primary hot air nozzles 74 for heating the inner surfaces of the front and rear containers have the same construction. The primary hot air nozzles 75 for heating the outer surfaces of the front and rear containers also have the same construction.

The secondary hot air nozzles 84 for heating the inner surfaces of the front and rear containers are also of the same construction. The secondary hot air nozzles 85 for heating the outer surfaces of the front and rear containers are also of the same construction.

The primary hot air nozzles 74 differ from the secondary hot air nozzles 84 only in the position of orifices relative to each other as will be described later, and these nozzles have the same construction except this difference. The primary hot air nozzles 75 and the secondary hot pair nozzles 85 have the same construction except the same difference as mentioned above. A detailed description will be given ohiefly of the container inner surface heating primary hot air nozzles 74 and the container outer surface heating primary hot air nozzles 75.

As shown in greater detail in FIG. 4, each of the primary hot air nozzles 74 is in the form of a tube generally rectangular to square in horizontal section and having and an upper edge surrounding a communication opening 64 formed in the pivotal plate 63. The nozzle 74 comprises a first side wall 91 facing to the front, second side wall 92 facing rightward, third side wall 93 facing rearward and fourth side wall 94 facing leftward which are integral with one another with a ridgeline formed between the adjoining walls, and has a horizontal flat bottom wall 95.

The first to fourth side walls 91 to 94 are trapezoidal when viewed face-to-face, and are each so inclined as to face obliquely upward. With the nozzle 71 inserted in the container 11, the first to fourth side walls 91 to 94 are opposed respectively to the first to fourth top panels 21 to 24.

The first side wall 91 is V-shaped in horizontal section so as to be positioned along the V-shaped seal part 31 of the first top panel 21. The angle of V made by the first side wall 91 remains constant from upper end to lower end. The second side wall 92 is flat in its entirety. The third side wall 93 has the same structure as the first side wall 91. The fourth side wall 94 has the same structure as the second side wall 92. A lug 96 having a bolt hole 97 is provided at the midportion of upper edge of each of the second and fourth side walls 92, 94. A multiplicity of orifices 98 are formed in lower portions of the first to fourth side walls 91 to 94 as will be described later.

The two container outer surface heating primary hot air nozzles 75 have the same construction although oriented in opposite directions to each other longitudinally of the conveyor 41. The rear nozzle 75 will be described below.

The nozzle 75 is in the form of a flat tube rectangular in horizontal section and having and an upper edge surrounding a communication opening 65 in the pivotal plate 63. The nozzle 75 comprises a first side wall 101 faoing to the front, second side wall 102 facing rightward, third side wall 103 facing rearward and fourth side wall 104 facing leftward which are integral with one another with a ridgeline formed between the adjoining walls, and has a horizontal flat bottom wall 105.

The first to fourth side walls 101 to 104 are rectangular when viewed face-to-face and vertical. The first side wall 101 has a forwardly projecting V-shaped horizontal section in conformity with the third side wall 93 of the nozzle 74. The first side wall 101 has a lower portion formed with a multiplicity of orifices 106. The second to fourth side walls 102 to 104 are all flat. Except for the third side wall 103, the first, second and fourth side walls 101, 102, 104 are provided at their upper ends with a flange 107 which is elongated transversely of the conveyor and has a bolt hole 108 at each of its opposite ends.

Unilluetrated bolts are inserted through the bolt holes 97 of the nozzle 74 and screwed into screw holes 66, and other bolts 111 are inserted through the bolt holes 108 of the nozzles 75 and screwed into screw holes 66 of the pivotal plate 63, whereby the nozzle 74 and the nozzle 75 are attached to the pivotal plate 63.

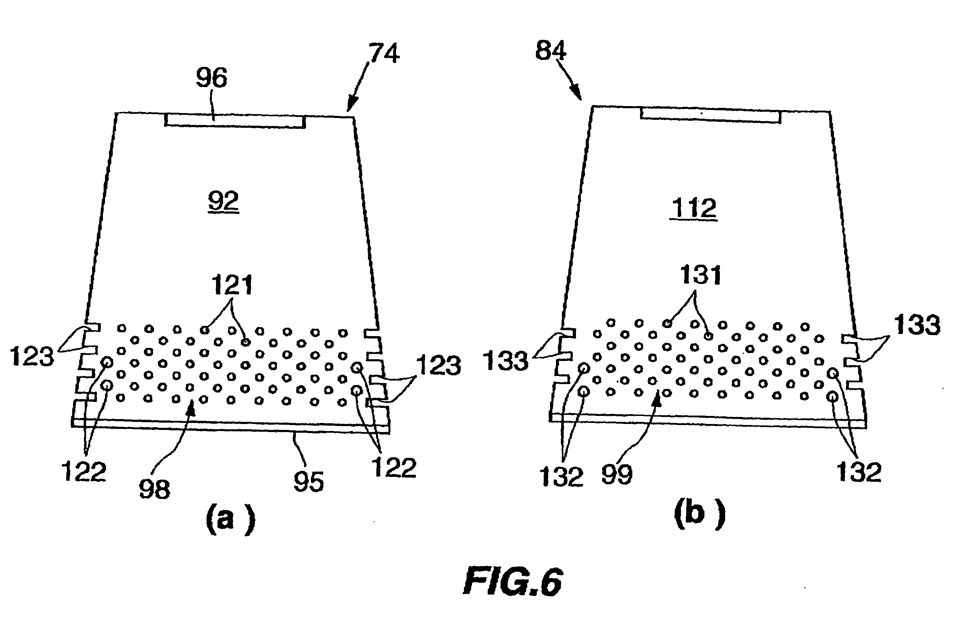

FIG. 6(a) shows the orifices 98 formed in the second side wall 92 of the container inner surface heating nozzle 74 of the primary heater 51. FIG. 6(b) shows orifices 99 formed in a second side wall 112 of the container inner surface heating nozzle 84 of the secondary heater 52.

There are three kinds of orifices 98 of the primary hot air nozzle 74, i.e., first orifices 121, second orifices 122 and third orifices 123. The first orifices 121, which are in the form of circular openings of small diameter, are formed in a staggered arrangement in the lower portion of the second side wall 92 except at its opposite ends. The second orifices 122 are circular openings of large diameter, and two orifices 122 are arranged one above the other at each side of the region having the first orifices 121. The third orifices 123 are horizontal slits, and four orifices 123 are formed as arranged vertically in the ridge at each side of lower portion of the second side wall 92.

Similarly, the secondary hot air nozzle 84 has three kinds of orifices 99, i.e., first orifices 131, second orifices 132 and third orifices 133. The first orifices 131 and the second orifices 132 of the nozzle 84 are identical with those of the nozzle 74 in shape, whereas the third orifices 133 thereof at each side are three in number, and the orifice corresponding to the lowermost orifice 123 of the nozzle 74 is not formed. The orifices 98 of the nozzle 74 closely resemble the orifices 99 of the nozzle 84 in the pattern of arragement but differ therefrom in position.

FIG. 7 schematically shows the region 141 to be heated, and the portions heated by the primary heater 51 and those heated by the secondary heater 52, the portions being included within the region 141. The first orifices 121 of the primary heater 51 correspond to small blank circles 151, the second orifices 122 thereof to large blank circles 162, and the third orifices 123 thereof to blank rectangles 153. The first orifices 131 of the secondary heater 52 correspond to small solid circles 161, the second orifices 132 thereof to large solid circles 162 and the third orifices 133 thereof to solid rectangles 163. These corresponding relationships are established between the container 11 at each of the first stop position and the second stop position and the corresponding heater.

First a description will be given of the regularity of arrangement of the small blank circles 151 and the small solid circles 161 corresponding respectively to the first orifices 121, 131 of primary heater 51 and the secondary heater 52. Suppose the small blank circles 151 and the small solid circles are arranged horizontally in lines L1, 2, 3, 4,..., m, and vertically in rows R1, 2, 3, 4,...,n, the lines L1, 2, 3, 4,..., m are counted from above, and the lows R1, 2, 3, 4,..., n are counted from right. The lines L1, 2, 3, 4,..., m, as well as the rows R1, 2, 3, 4,..., n, are at a definite spacing.

The small blank circles 151 are positioned at the points of intersection of the odd-numbered lines L1, 3,..., m and the odd-numbered rows R1, 3,..., n, and at the intersection points of the even-numbered lines L2, 4,..., m and the even-numbered rows R2, 4,..., n. The small solid circles 161 are positioned at the points of intersection of the even-numbered lines L2, 4,..., m and the odd-numbered rows R1, 3,..., n, and at the intersection points of the even-numbered lines L2, 4,..., m and the odd-numbered rows R1, 3,..., n.

The large blank circles 152 corresponding to the second orifices 122 of the primary heater 51 are vertically spaced apart, two at each of the right and left sides. Positioned beneath each large blank circle 152 is the large solid circle 162 corresponding to the second orifice 132 of the secondary heater 52.

The blank rectangles 153 corresponding to the third orifices 123 of the primary heater 51 are vertically spaced apart, four at each of left and right sides. The three solid rectangles 163 corresponding to the third orifices 133 of the secondary heater 52 at each side are positioned between the four blank rectangles 143.

The small blank circles 151, large blank circles 152 and blank rectangles 153, and the small solid circle 161, large solid circle 162 and solid rectangles 163 occupy the region to be heated almost without leaving clearances, each blank portion not lapping over the adjoining solid portions. This indicates that the entire region to be heated is heated uniformly once.

Although the arrangement of the orifices in the second side walls 92, 112 of the primary hot air nozzle 74 and the secondary hot air nozzle 84 has been described above, the side walls other than the side walls 92, 112, and the primary hot air nozzles 75 and the secondary hot air nozzles 85 for heating the outer surfaces of containers are similar in orifice arrangement to the above arrangement.

## Claims

1. A heating device for heat-sealing top portions of containers comprising a primary heater (51) and a secondary heater (52) arranged respectively at a first stop position and a second stop position of holders (62) of an intermittently drivable container conveyor (41), the primary heater (51) having a primary hot air nozzle (74) in the form of a bottomed tube generally square to rectangular in horizontal section and movable into and out of a top forming portion (14) of the container (11) as held by the holder (62) at halt in the first stop position, the secondary heater (52) having a secondary hot air nozzle (84) in the form of a bottomed tube generally square to rectangular in horizontal section and movable into and out of the top forming portion (14) of the container as held by the holder (62) at halt in the second stop position, the primary hot air nozzle (74) and the secondary hot air nozzle (84) being each formed in a side wall thereof with a plurality of orifices (98) arranged in a specified pattern so as to correspond to the region to be heated of the top forming portion (14), the heating device being such that the positions of the orifices (98) of the primary hot air nozzle (74) differ respectively from the positions of the orifices of the secondary hot air nozzle (84) with respect to the container as held by the holder (62) at halt in the corresponding stop position.

2. A heating device as defined in claim 1 wherein the primary hot air nozzle (74) and the secondary hot air nozzle (84) each have four side walls (91 to 94), and in each side wall of the nozzle (74) and the side wall of the nozzle (84) corresponding thereto, the orifices (98) of the two nozzles (74, 84) are arranged in lines L1, 2, 3, 4,..., m at the same spacing and in rows R1, 2, 3, 4,..., n at the same spacing, the two nozzles (74, 84) being identical in the respective positions of the lines and in the respective positions of the rows with respect to the container (11) as held by the holder (62) at halt in the corresponding stop position, the orifices of one of the nozzles (74, 84) being positioned at points of intersection of the odd-numbered lines L1, 3,..., m and the odd-numbered rows R1, 3,..., n and at points of intersection of the even-numbered lines L2, 4,..., m and the even-numbered rows R2, 4,..., n, the orifices of the other nozzle being positioned at points of intersection of the odd-numbered lines L1, 3,..., m and the even-numbered rows R2, 4,..., n and at points of intersection of the even-numbered lines L2, 4,..., m and the odd-numbered rows R1, 3,..., n.

## Patentansprüche

1. Heizvorrichtung zum Heißsiegeln von oberen Behälterbereichen mit einer ersten Heizvorrichtung (51) und einer zweiten Heizvorrichtung (52), die entsprechend an einer ersten Halteposition und einer zweiten Halteposition von Halteelementen (62) einer intermittierend antreibbaren Behälterfördervorrichtung (41) angeordnet sind, wobei die erste Heizvorrichtung (51) eine erste Heißluftdüse (74) in Form eines Rohres mit Boden umfaßt, das im Horizontalschnitt eine im wesentlichen quadratische bis rechteckige Form aufweist und in einen Deckelbildungsbereich (14) des Behälters (11) hinein und aus diesem heraus bewegbar ist, wenn der Behälter (11) in der ersten Halteposition vom Halteelement (62) gehalten wird, die zweite Heizvorrichtung (52) eine zweite Heißluftdüse (84) in Form eines Rohres mit Boden umfaßt, das im Horizontalschnitt eine im wesentlichen quadratische bis rechteckige Form aufweist und in einen Deckelbildungsbereich (14) des Behälters (11) hinein und aus diesem heraus bewegbar ist, wenn der Behälter (11) in der zweiten Halteposition vom Halteelement (62) gehalten wird, die erste Heißluftdüse (74) und die zweite Heißluftdüse (84) jeweils in einer Seitenwand mit einer Mehrzahl von Öffnungen (98) versehen ist, die in einem bestimmten Muster entsprechend dem zu erwärmenden Bereich des Deckelbildungsbereiches (14) angeordnet ist, wobei die Heizvorrichtung derart ausgebildet ist, daß sich die Positionen der Öffnungen (98) der ersten Heißluftdüse (74) von den Positionen der Öffnungen der zweiten Heißluftdüse (84) hinsichtlich des durch das Halteelement (62) in der entsprechenden Halteposition gehaltenen Behälters voneinander unterscheiden.

2. Heizvorrichtung nach Anspruch 1, worin die erste Heißluftdüse (74) und die zweite Heißluftdüse (84) jeweils vier Seitenwände (91 bis 94) umfassen, und in jeder Seitenwand der entsprechenden Seitenwand der Düse (74) und der entsprechenden Seitenwand der Düse (84) die Öffnungen (98) der zwei Düsen (74, 84) in Zeilen L1, 2, 3, 4, ..., m im gleichen Abstand und in Spalten R1, 2, 3, 4, ..., n in gleichem Abstand angeordnet sind, die zwei Düsen (74, 84) in den entsprechenden Positionen der Zeilen und in den entsprechenden Positionen der Spalten hinsichtlich des Behälters (11), wenn dieser von dem Halteelement (62) in der entsprechenden Halteposition gehalten ist, identisch sind, wobei die Öffnungen einer der Düsen (74, 84) an Schnittpunkten der ungeraden Zeilen L1, 3, ..., m und der ungeraden Spalten R1, 3, ..., n und an Schnittpunkten der geraden Zeilen L2, 4, ..., m und geraden Spalten R2, 4, ..., n angeordnet sind, und die Öffnungen der anderen Düse an Schnittpunkten der ungeraden Zeilen L1, 3, ..., m und der geraden Spalten R2, 4, ..., n und an Schnittpunkten der geraden Zeilen L2, 4, ..., m und der ungeraden Spalten R1, 3, ..., n angeordnet sind.

## Revendications

1. Dispositif de chauffage pour le thermoscellage de parties de dessus de récipients, comprenant un organe de chauffage principal (51) et un organe de chauffage secondaire (52) respectivement disposés au niveau d'une première position d'arrêt et d'une seconde position d'arrêt de supports (62) d'un convoyeur de récipients (41) apte à être entraîné de manière intermittente, l'organe de chauffage principal (51) comportant une buse d'air chaud principale (74) sous la forme d'un tube muni d'un fond et de section horizontale sensiblement carrée à rectangulaire, qui est mobile pour pénétrer dans une partie formant dessus (14) du récipient (11) et pour sortir de celle-ci lorsque le récipient (11) est maintenu par le support (62) à l'arrêt dans la première position d'arrêt, tandis que l'organe de chauffage secondaire (52) comporte une buse d'air chaud secondaire (84) sous la forme d'un tube muni d'un fond et de section horizontale sensiblement carrée à rectangulaire, qui est mobile pour pénétrer dans la partie formant dessus (14) du récipient et pour sortir de celle-ci lorsque le récipient est maintenu par le support (62) à l'arrêt dans la seconde position d'arrêt, la buse d'air chaud principale (74) et la buse d'air chaud secondaire (84) comportant chacune dans leur paroi latérale de multiples orifices (98) disposés suivant une configuration spécifiée afin de correspondre à la zone à chauffer de la partie formant dessus (14), et le dispositif de chauffage étant tel que les positions des orifices (98) de la buse d'air chaud principale (74) diffèrent respectivement des positions des orifices de la buse d'air chaud secondaire (84) par rapport au récipient maintenu par le support (62) à l'arrêt dans la position d'arrêt correspondante.

2. Dispositif de chauffage tel que défini dans la revendication 1, dans lequel la buse d'air chaud principale (74) et la buse d'air chaud secondaire (84) comportent chacune quatre parois latérales (91 à 94), et dans lequel dans chaque paroi latérale de la buse (74) et dans la paroi latérale correspondante de la buse (84), les orifices (98) des deux buses (74, 84) sont disposés en rangées L1, 2, 3, 4, ... , m équidistantes et en colonnes R1, 2, 3, 4, ... , n équidistantes, les deux buses (74, 84) étant identiques en ce qui concerne les positions respectives des rangées et les positions respectives des colonnes par rapport au récipient (11) maintenu par le support (62) à l'arrêt dans la position d'arrêt correspondante, et les orifices de l'une des buses (74, 84) étant positionnés au niveau de points d'intersection des rangées impaires L1, 3, ... , m et des colonnes impaires R1, 3, ... , n et au niveau de points d'intersection des rangées paires L2, 4, ... , m et des colonnes paires R2, 4, ... , n, tandis que les orifices de l'autre buse sont positionnés au niveau de points d'intersection des rangées impaires L1, 3, ... , m et des colonnes paires R2, 4, ... , n et au niveau de points d'intersection des rangées paires L2, 4, ... , m et des colonnes impaires R1, 3, ... , n.
